# EUROPEAN PATENT APPLICATION

(11) **EP 4 610 400 A1**
(43) Date of publication of application: **03.09.2025**
(21) Application number: 23882382.7
(22) Date of filing: 06.10.2023
(51) Int. Cl.: C25B 9/70, C25B 1/04, C25B 9/00, C25B 9/65, C25B 15/02

(54) **WATER ELECTROLYSIS SYSTEM**

(30) Priority: 27.10.2022 JP 2022172276
(71) Applicant: Hitachi, Ltd., Tokyo 100-8280 (JP)
(72) Inventor: GUNJI, Akira, Tokyo 100-8280 (JP); MIZUKAMI, Takaaki, Tokyo 100-8280 (JP); SUGIMASA, Masatoshi, Tokyo 100-8280 (JP)
(74) Representative: Mewburn Ellis LLP
(86) International application number: PCT/JP2023/036464
(87) International publication number: WO 2024/090173

(57) **Abstract**

A serially connected stack group is configured by serially connecting a plurality of water electrolysis stacks and at least one overcurrent interruption means, a series-parallel stack unit is configured by parallelly connecting at least three serially connected stack groups, and a water electrolysis stack group configured by serially connecting a plurality of the series-parallel stack units, is connected to a DC power supply.

## Description

### Technical Field

The present invention relates to a water electrolysis system in which a plurality of water electrolysis stacks are connected to a DC power supply.

### Background Art

Hydrogen, unlike fossil fuels, is clean energy that does not emit carbon dioxide during combustion. Therefore, hydrogen is featured as one of clean energy for global warming countermeasures, and technological development related to production, transportation, and utilization of hydrogen has been advanced.

Under such circumstances, the present invention relates to a mass-production device of hydrogen by larger-scale water electrolysis using renewable energy or the like and control thereof.

For the purpose of reducing manufacturing costs, increase in scale of a water electrolysis system has been promoted mainly in Europe, and introduction of a 500 GW system is expected by 2050. Although the electrolysis stack required for hydrogen production is expected to reduce the facility cost due to the mass production effect, the DC power supply requiring a large current and a low voltage is a special specification and is not expected to contribute to cost reduction, and the cost reduction of the power supply is required.

NPL 1 discloses that in a large-scale water electrolysis system exceeding 20 MW, it is necessary to operate a large number of electrolysis stacks with a single power supply for highly efficient operation of the power supply.

PTL 1 discloses an electrolytic system in which electrolytic stacks in which bypass circuits are connected in parallel are connected in series, and serially connected stack groups are connected in parallel. PTL 2 discloses a system in which a large number of electrolytic stacks are all connected in series and parallel.

### Citation List

### Patent Literature

PTL 1: JP 6058205 B2
PTL 2: JP 2013-120680 A

### Non-Patent Literature

NPL 1: IRENA report "Green Hydrogen cost reduction" (https://www.irena.org/- /media/Files/IRENA/Agency/Publication/2020/Dec/IRENA_Green_ hydrogen_cost_2020.pdf)

### Summary of Invention

### Technical Problem

As a method for collectively operating a large number of electrolytic stacks described in NPL 1, multi-series connection of the electrolytic stacks can be cited. It is expected that it is possible to use a common large DC power supply and realize increase in scale at low cost by increasing the voltage by multi-series connection. However, in a case of multi-series connection of the electrolysis stacks, the same current flows through all the electrolysis stacks, and thus, in a case where an increase in resistance or a short circuit occurs in some of the electrolysis stacks, it is difficult to reduce the current or stop only the abnormal stack. In addition, if the rated current continues to flow through the electrolysis stack having increased resistance, deterioration of the electrolysis stack is accelerated, and when the allowable calorific value is further exceeded, an abnormality such as a short circuit may occur. Therefore, it is necessary to reduce or stop the current in all the stacks for the abnormal stack, and the hydrogen production amount is greatly reduced.

In addition, in PTL 1, since the serially connected stack group is connected in parallel, the influence on the total resistance of the serially connected stack group is small even when the resistance of some of the electrolytic stacks increases, and the effect of reducing the current flowing through the serially connected stack group including the stack with increased resistance is small.

In addition, in PTL 2, since the stacks are connected in parallel, when the resistance of a part of the stacks increases, more current flows through the normal stacks connected in parallel, and the current flowing through the stack with increased resistance is reduced. However, when a short circuit occurs in some of the stacks, the stacks connected in parallel are also in a short-circuit state (terminal voltage is 0), and the abnormality also propagates to the normal parallel stack. When the operating stack is externally short-circuited, there is a concern that an abnormality occurs inside the stack, such as an increase in resistance due to catalyst deterioration or an internal short-circuit due to abnormal heat generation.

Therefore, an object of the present invention is, in a water electrolysis system in which a large number of water electrolysis stacks are connected in series, to enable current reduction in a stack with increased resistance and suppression of propagation to another stack due to a short circuit of a part of the stacks, and to keep a production amount of hydrogen high even when a stack abnormality occurs.

### Solution to Problem

In order to solve the above problems, in a water electrolysis system according to an embodiment of the present invention, a serially connected stack group is configured by serially connecting a plurality of water electrolysis stacks and at least one overcurrent interruption means, a series-parallel stack unit is configured by parallelly connecting at least three serially connected stack groups, and a water electrolysis stack group configured by serially connecting a plurality of the series-parallel stack units, is connected to a DC power supply.

### Advantageous Effects of Invention

According to the present invention, in a water electrolysis system in which a plurality of water electrolysis stacks are connected to a DC power supply, it is possible to reduce a current of a stack with increased resistance and to suppress propagation to another stack due to a short circuit of a part of the stacks, and it is possible to keep a production amount of hydrogen high even when a stack abnormality occurs.

Further features related to the present invention will become apparent from the description of the present specification and the accompanying drawings. Problems, configurations, and effects other than those described above will be clarified by the following description of embodiments.

### Brief Description of Drawings

[FIG. 1] FIG. 1 is a schematic view illustrating a configuration of an entire water electrolysis system according to an embodiment of the present invention.
[FIG. 2] FIG. 2 is a diagram illustrating an example of a connection configuration between a water electrolysis stack group and a DC power supply.
[FIG. 3] FIG. 3 is a diagram illustrating a connection configuration between a water electrolysis stack group and a DC power supply according to Example 1.
[FIG. 4] FIG. 4 is a graph illustrating current density-voltage characteristics at 70°C of the water electrolysis stack used in Example 1.
[FIG. 5] FIG. 5 is a graph illustrating results of evaluation of a deteriorated stack current in Examples and Comparative Examples.
[FIG. 6] FIG. 6 is a graph illustrating results of external short circuit evaluation in Examples and Comparative Examples.
[FIG. 7] FIG. 7 is a view illustrating a configuration of a water electrolysis system according to a modification.

### Description of Embodiments

Hereinafter, embodiments of the present invention will be described with reference to the drawings. Note that the same components are denoted by the same reference numerals, and in a case where description thereof is redundant, the description may be omitted. In addition, the present invention is not limited to the following embodiments and Examples.

It is expected that it is possible to use a common large DC power supply and realize increase in scale of the water electrolysis system at low cost by connecting the water electrolysis stacks in series and increasing the voltage.

Energy conversion efficiency from electric power to hydrogen in a common water electrolysis stack is about 70-90%, and the rest generates heat. If the resistance of the water electrolysis stack increases, efficiency decreases and more heat is generated. If the cooling rate is insufficient for heat generation of the water electrolysis stack, the water electrolysis stack increases in temperature. While the resistance of the water electrolysis stack decreases as the temperature increases, when the temperature exceeds the heat-resistant temperature, which is 80-100°C, the resistance increases due to deterioration of the material, a hole is formed in a film separating hydrogen and oxygen, or an electrical short circuit occurs. Therefore, it is important to control both the normal water electrolysis stack and the water electrolysis stack with increased resistance within an appropriate temperature range.

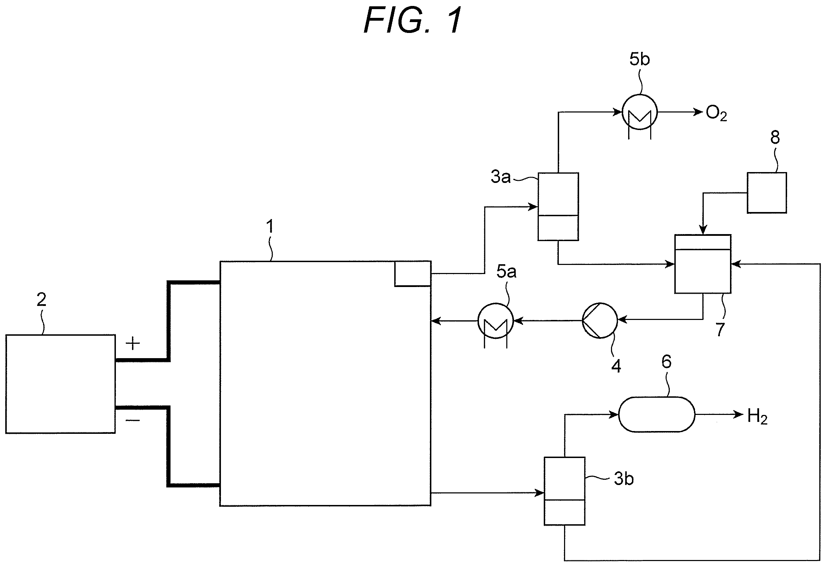

FIG. 1 illustrates an example of a water electrolysis system according to an embodiment of the present invention. The water electrolysis system includes a water electrolysis stack group 1 including a large number of water electrolysis stacks, a DC power supply 2 for supplying power to the system, gas-liquid separators 3a, 3b for separating water and gas, a pump 4 for supplying pure water to the water electrolysis stack group 1, heat exchangers 5a and 5b for exchanging heat with a medium, a hydrogen high purification device 6 for increasing purity of hydrogen by a method such as adsorption of a gas other than hydrogen, a pure water tank 7 for storing pure water, and a pure water production device 8 for producing pure water by purification. Devices other than the water electrolysis stack group 1 and the DC power supply 2 may be different from the illustrated arrangement, and other devices may be added. A plurality of devices other than the water electrolysis stack group 1 and the DC power supply 2 may be installed to separately control the water electrolysis stack group 1. Further, a plurality of the water electrolysis stack groups 1 may be connected in parallel to the DC power supply 2.

Water of temperature controlled by the heat exchanger 5a is supplied from the pump 4 to the water electrolysis stack group 1, and a direct current flows from the DC power supply 2, whereby electrolysis of water occurs to generate hydrogen and oxygen. The generated hydrogen and oxygen are discharged from the water electrolysis stack group 1 together with water. Oxygen is separated by the gas-liquid separator 3a, cooled by the heat exchanger 5b, and then discharged from the system. Hydrogen is separated by the gas-liquid separator 3b, and after being highly purified by the hydrogen high purification device 6, the hydrogen is discharged from the system. The water separated by the gas-liquid separators 3a, 3b is reused as water to be supplied to the water electrolysis stack group 1. Water consumed in the series of processes is supplied from the pure water production device 8.

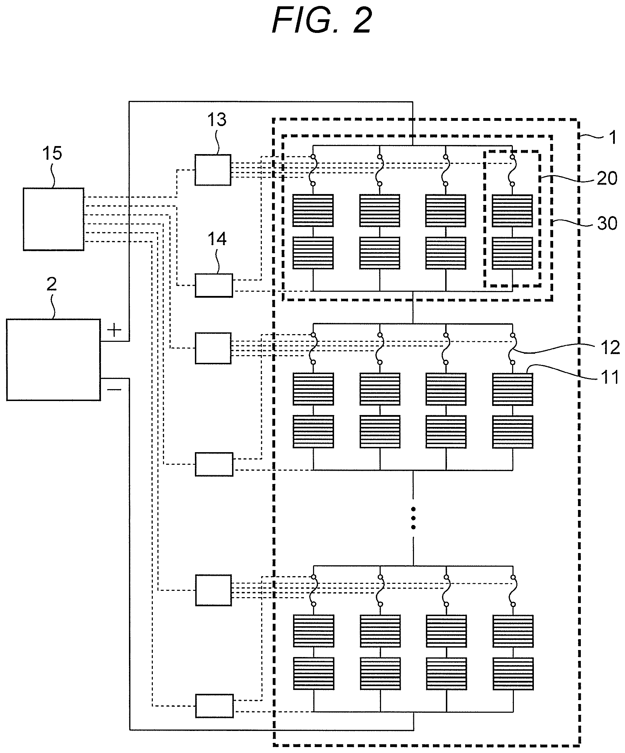

FIG. 2 illustrates an electrical connection configuration and an electrical control device for the water electrolysis stack group 1 and the DC power supply 2. A serially connected stack group 20 is configured by serially connecting a plurality of water electrolysis stacks 11 and an overcurrent interruption means 12. A series-parallel stack unit 30 is configured by parallelly connecting at least three serially connected stack groups 20. The water electrolysis stack group 1 is configured by serially connecting a plurality of the series-parallel stack units 30, and is connected to the DC power supply 2. In addition, an overcurrent interruption operation detection means 13 for detecting the operation of the overcurrent interruption means 12 and an electrolytic state detection means 14 for detecting at least one of the voltage and the current of the serially connected stack group 20 are installed, and the output of the DC power supply 2 is controlled by the DC power supply control means 15 on the basis of the results of the detectors.

As the water electrolysis stack 11, a PEM (Polymer Electrolyte Membrane) type in which hydrogen and oxygen are generated by electrolysis of pure water using a solid polymer electrolyte membrane, an alkali type in which hydrogen and oxygen are generated by an alkali solution and electric power, an anion exchange membrane type using an anion exchange membrane, and the like can be used. However, since the voltage of the electrode of the water electrolysis stack 11 increases due to the series connection of the water electrolysis stack 11, it is desirable to use the PEM type or the anion exchange membrane type capable of using pure water having low conductivity as cooling water from the viewpoint of insulation properties with respect to cooling water circulation system equipment.

If the series number of the water electrolysis stacks 11 in the serially connected stack group 20 is too large, the effect of reducing the current flowing through the serially connected stack group 20, including the water electrolysis stack 11 with increased resistance, is reduced. In addition, the withstand voltage required for the overcurrent interruption means 12 increases, and the size of the element increases. From this viewpoint, the series number of the water electrolysis stacks 11 in the serially connected stack group 20 is desirably 4 or less, and more desirably 2.

The parallel number of the serially connected stack groups 20 in the series-parallel stack unit 30 can be set to any value of 3 or more, in such a range that the rated current of the water electrolysis stack group 1 is equal to or less than the maximum current of the DC power supply 2.

The series number of the series-parallel stack units 30 can be set to any value in such a range that the rated voltage of the water electrolysis stack group 1 is equal to or less than the maximum voltage of the DC power supply 2.

As the overcurrent interruption means 12, a DC breaker and a DC fuse can be used. When one water electrolysis stack 11 is short-circuited, a large current instantaneously flows through the serially connected stack group 20 including the water electrolysis stack 11, and the overcurrent interruption means 12 is activated to interrupt the current. After the current interruption, a current corresponding to the interruption flows in a dispersed manner in the remaining serially connected stack group 20. Therefore, the rated current of the overcurrent interruption means 12 needs to be greater than [rated current density of the water electrolysis stack 11] × (1 + 1/([parallel number of the serially connected stack group 20] - 1)).

Even when one water electrolysis stack 11 is short-circuited, since there is the water electrolysis stack 11 connected in series, the voltage of the serially connected stack group 20 including the short-circuited water electrolysis stack 11 does not become 0, and damage to the serially connected stack group 20 connected in parallel can be suppressed.

The overcurrent interruption operation detection means 13 can detect various physical quantities such as a current, a voltage difference, and a position. The electrolytic state detection means 14 may directly measure a voltage or a current, or may estimate the voltage or the current from the temperature of the water electrolysis stack 11 (measurement means is not illustrated) or an outlet water temperature thereof (measurement means is not illustrated).

After the overcurrent interruption means 12 detects the operation by the overcurrent interruption operation detection means 13, the output of the DC power supply 2 is controlled by the DC power supply control means 15 so that the detection result of the electrolytic state detection means 14 of the normal serially connected stack group 20 connected in parallel does not exceed the allowable current and allowable voltage of the water electrolysis stack 11. As a result, the overload state of the remaining serially connected stack group 20 does not continue after the current interruption, and safety is ensured. In addition, for example, when there are four serially connected stack groups 20 connected in parallel, the operation at 75% load of the water electrolysis stack group 1 can be continued even after the occurrence of the short circuit. Therefore, the reduction in the hydrogen production amount can be suppressed.

In addition, since the current is distributed so that the voltages of the serially connected stack groups 20 connected in parallel are equal, when the resistance of one water electrolysis stack 11 increases, the current flowing to the serially connected stack group 20 including the water electrolysis stack 11 decreases. At this time, since the reduced current is distributed to the remaining serially connected stack groups 20 connected in parallel, it is desirable that the parallel number of the serially connected stack groups 20 be large from the viewpoint of suppressing the current rise of the healthy serially connected stack group 20.

### [Example 1]

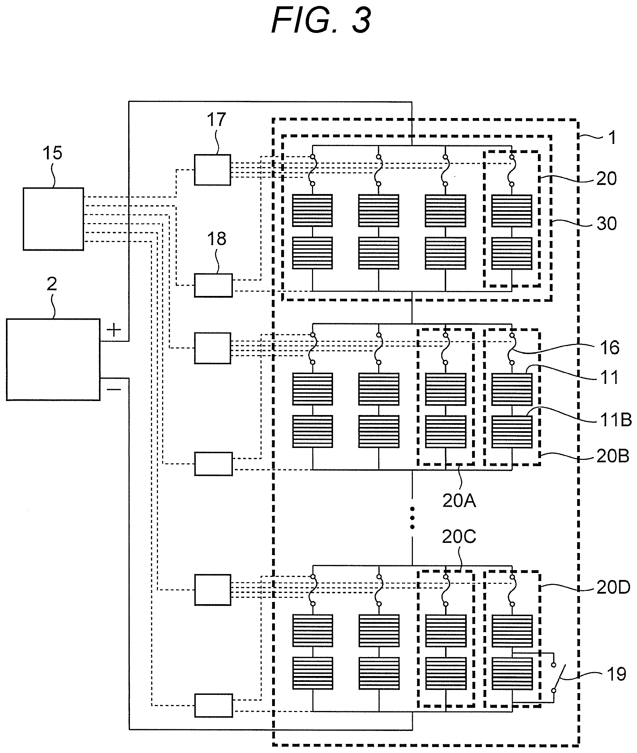

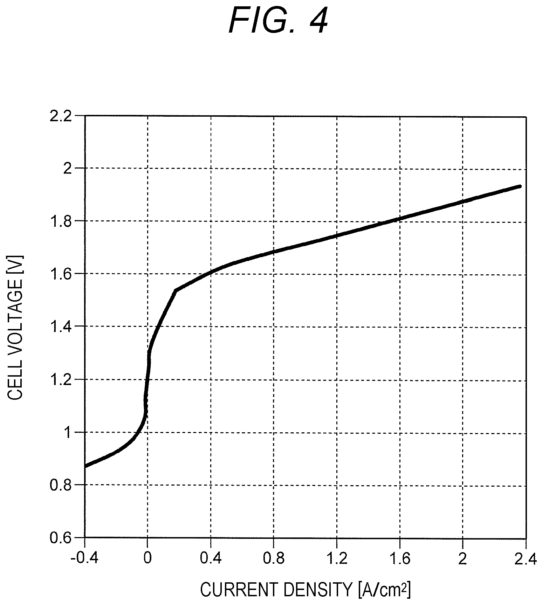

FIG. 3 is a diagram illustrating a connection configuration between the water electrolysis stack group 1 and the DC power supply 2 according to Example 1. As the water electrolysis stack 11, a stack of 50 water electrolysis cells of the PEM type each having an electrode area of 50 cm² was used. The current density-voltage characteristics at 70°C of the stack used are shown in FIG. 4. In the PEM type water electrolysis stack, even if the current density is set to 0 immediately after water electrolysis, hydrogen and oxygen are held in the electrode and the cell voltage does not immediately become 0, and the voltage is held. When the cell voltage is lowered to a voltage lower than the open circuit voltage, a reverse current flows until hydrogen and oxygen are consumed in the electrode.

In the present Example, two water electrolysis stacks 11 and a DC fuse 16 (overcurrent interruption means) were connected in series to constitute the serially connected stack group 20, and four serially connected stack groups 20 were connected in parallel to constitute the series-parallel stack unit 30. The rated current of the direct-current fuse 16 was equivalent to the current density of the water electrolysis cell of 4.0 A/cm² (200 A). An ammeter 17 was installed in each serially connected stack group 20, and a voltmeter 18 was further installed in the series-parallel stack unit 30.

Then, 8 series-parallel stack units 30 were connected in series to form the water electrolysis stack group 1, and the water electrolysis stack group 1 was connected to the DC power supply 2. Among the water electrolysis stacks 11, a deteriorated stack 11B with a 20% increase in resistance was employed. In another series-parallel stack unit 30, a switch 19 for externally short-circuiting one stack was installed.

Ultrapure water at 60°C was supplied to the oxygen electrode side of each water electrolysis stack 11 using the pump 4 and the heat exchanger 5a, and the flow rate was controlled so that the stack temperature was 70°C. The pressure was controlled so that the pressure of generated hydrogen was 0.9 MpaG (not shown).

### [Current Evaluation of Deteriorated Stack]

A current (400 A) corresponding to a current density of 2.0 A/cm² of the water electrolysis cell was passed from the DC power supply, and a current of a normal serially connected stack group 20A parallel to a serially connected stack group 20B including a deteriorated stack 11B was measured.

### [External Short Circuit Evaluation]

In addition, in a state where a current (300 A, 400 A) corresponding to a current density of 1.5 A/cm² and 2.0 A/cm² of the water electrolysis cell flowed from the DC power supply, the switch 19 was closed, and one stack was externally short-circuited. For the normal serially connected stack group 20C parallel to the serially connected stack group 20D including the short-circuited stack, the current value immediately after the switch 19 was closed and the current value after the current interruption by the DC fuse 16 occurred were measured. In the test at 400 A corresponding to 2.0 A/cm², the current was changed to 300 A such that, after the DC fuse 16 was activated, the density of the current flowing through the normal serially connected stack group 20C was 2.0 A/cm².

### [Example 2]

The same configuration as in Example 1 was adopted except that the parallel number of the serially connected stack groups 20 constituting the series-parallel stack unit 30 was 3. The deteriorated stack current evaluation and the external short circuit evaluation were also controlled such that the current density was the same as in Example 1.

### [Example 3]

A configuration was similar to that of Example 1 except that the series number of the water electrolysis stacks 11 in the serially connected stack group 20 was 3 and the series number of the series-parallel stack units 30 was 5.

### [Example 4]

A configuration was similar to that of Example 1 except that the series number of the water electrolysis stacks 11 in the serially connected stack group 20 was 4 and the series number of the series-parallel stack units 30 was 4.

### [Comparative Example 1]

A configuration was similar to that of Example 1 except that the series number of the water electrolysis stacks 11 in the serially connected stack group 20 was 16 and the series-parallel stack units 30 were not connected in series.

### [Comparative Example 2]

A configuration was similar to that of Example 1 except that the series number of the water electrolysis stacks 11 in the serially connected stack group 20 was 1 and the series number of the series-parallel stack units 30 was 16.

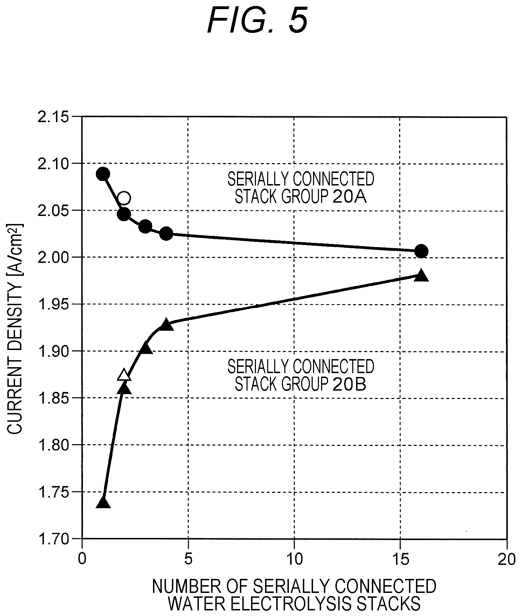

The results of the current evaluation of the deteriorated stack in Examples 1 to 4 and Comparative Examples 1 and 2 are shown in FIG. 5. The smaller the series number, the greater the effect of reducing the current flowing to the serially connected stack group 20B including the deteriorated stack 11B. In Comparative Example 1 in which the series number of the water electrolysis stacks 11 was 16, only the current density flowing to the serially connected stack group 20B was reduced by 1%, and almost no effect was observed. In addition, comparing Example 1 with 4 parallel and Example 2 with 3 parallel, in Example 1 with the larger parallel number, the current densities of both the serially connected stack group 20A and the serially connected stack group 20B were lower, and the water electrolysis stack 11 was less likely to deteriorate.

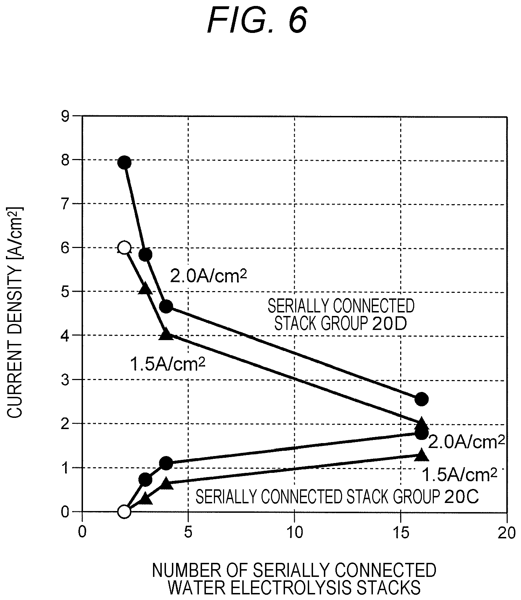

FIG. 6 illustrates the current density before the switch 19 is closed and the current is interrupted by the DC fuse 16 in the external short circuit evaluation of Examples 1 to 4 and Comparative Example 1. In Examples 1 and 2 in which the series number of the water electrolysis stacks 11 was 2, the current density of the normal serially connected stack group 20C was almost 0, and a large reverse current was not measured. Almost the entire current flowed through the serially connected stack group 20D including the short-circuited stack, and then the current was interrupted by the DC fuse 16. In Examples 3 to 5, since the series number of the water electrolysis stacks 11 was greater, the value of the current flowing through the serially connected stack group 20D was decreased. However, since the rated current of the DC fuse 16 was exceeded, the DC fuse 16 was activated. Thereafter, the operation could be continued with the remaining serially connected stack groups 20C.

In Comparative Example 1 in which the series number of the water electrolysis stacks 11 was 16, the influence of the short-circuited stack was small, and the current density to the serially connected stack group 20D was suppressed to be low. Therefore, the DC fuse 16 was not activated, and the operation could be continued.

In Comparative Example 2, since a large current flowed through the serially connected stack group 20D and the DC fuse 16 was instantaneously activated, the serially connected stack group 20D could not be continued. Also in the serially connected stack groups 20C connected in parallel, all the DC fuses 16 were activated, and the operation could not be continued. This is supposed to be because the DC fuse 16 was activated by the reverse current generated in the serially connected stack group 20C. When the DC fuse 16 was activated in any one of the three serially connected stack groups 20C connected in parallel, the current density of the remaining serially connected stack groups 20C increased, and finally all the DC fuses 16 were activated.

In Examples 1 to 4, the effect of reducing the current density to the deteriorated stack 11B, the effect of suppressing the reverse current in the serially connected stack group 20C, and the effect of interrupting the current to the serially connected stack group 20D including the short-circuited stack were confirmed, and the electrolysis was continued even with the degradation and short circuit of the water electrolysis stack 11, and the decrease in the production amount of hydrogen could be suppressed.

### [Modification]

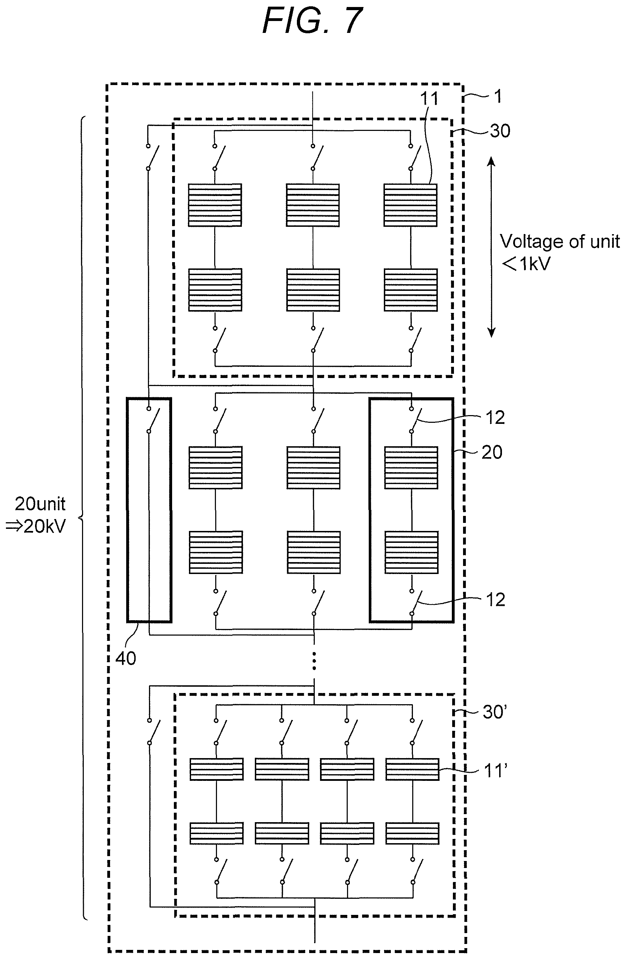

FIG. 7 is a view illustrating an outline of the configuration of a water electrolysis system according to a modification of the present invention. In the water electrolysis system shown in FIG. 7, a plurality of the series-parallel stack units 30 in which three serially connected stack groups 20 in which two water electrolysis stacks 11 are connected in series are connected in series.

The overcurrent interruption means 12 is disposed ahead and behind each serially connected stack group 20.

The voltage of each series-parallel stack unit is 1kv or less. As a result, a commercially available product having a relatively low withstand voltage can be used as the overcurrent interruption means 12.

Furthermore, in the present modification, a detachment switch 40 for disconnecting between the series-parallel stack units is provided. As a result, when an abnormality occurs in a certain unit, by turning off the switch in the unit and turning on the detachment switch, it is possible to maintain the electrical connection bypassing the unit where the abnormality occurs, and it is possible to prevent the output from being greatly reduced as the entire system.

In addition, as the water electrolysis stack 11' included in the series-parallel unit 30', a stack different from the water electrolysis stack 11 may be used by changing the number of stacks of electrodes or the like.

According to Examples of the present invention described above, the following operational effects are obtained.
(1) A water electrolysis system according to the present invention is characterized in that a serially connected stack group is configured by serially connecting a plurality of water electrolysis stacks and at least one overcurrent interruption means, a series-parallel stack unit is configured by parallelly connecting at least three serially connected stack groups, and a water electrolysis stack group configured by serially connecting a plurality of the series-parallel stack units, is connected to a DC power supply.
   By adopting the above configuration, in the water electrolysis system in which the plurality of water electrolysis stacks are connected to the DC power supply, it is possible to reduce the current of the stack with increased resistance and to suppress the propagation to another stack due to the short circuit of a part of the stacks, and it is possible to keep the production amount of hydrogen high even when the stack abnormality occurs.
(2) A series number of the water electrolysis stacks in the serially connected stack group is 4 or less. This makes it possible to sufficiently reduce the current flowing through the serially connected stack group when the resistance of the water electrolysis stack in the serially connected stack group is reduced due to deterioration, and also makes the withstand voltage required for the overcurrent interruption means relatively low, making it possible to utilize a smaller element.
(3) A rated current of the overcurrent interruption means is smaller than [rated current density of the water electrolysis stack] × [a parallel number of the serially connected stack group]. In such a configuration, when one water electrolysis stack is short-circuited and the overcurrent interruption means is activated, it is possible to prevent an excessive current from flowing through the serially connected stack group other than the serially connected stack group including the short-circuited water electrolysis stack.
(4) The rated current of the overcurrent interruption means is greater than [rated current density of the water electrolysis stack] × (1 + 1/([a parallel number of the serially connected stack group] - 1)). In such a configuration, when one water electrolysis stack is short-circuited and the overcurrent interruption means is activated, the current can flow in a distributed manner through the serially connected stack group other than the serially connected stack group including the short-circuited water electrolysis stack.

The present invention is not limited to the above-described embodiments, and various modifications are possible. For example, the above-described embodiments have been described in detail for the sake of comprehensible explanation of the present invention, and the present invention is not necessarily limited to a mode provided with all the described configurations. Further, a part of the configuration of one embodiment can be replaced with the configuration of another embodiment. In addition, the configuration of another embodiment can be added to the configuration of a certain embodiment. In addition, a part of the configuration of each embodiment can be deleted, added to or replaced with other configurations.

### Reference Signs List

- 1: water electrolysis stack group
- 2: DC power supply
- 11: water electrolysis stack
- 12: overcurrent interruption means (DC fuse 16)
- 20: serially connected stack group
- 30A to 30D: partially serially connected stacks
- 40: detachment switch

## Claims

1. A water electrolysis system, wherein
a serially connected stack group is configured by serially connecting a plurality of water electrolysis stacks and at least one overcurrent interruption means,
a series-parallel stack unit is configured by parallelly connecting at least three serially connected stack groups, and
a water electrolysis stack group configured by serially connecting a plurality of the series-parallel stack units, is connected to a DC power supply.

2. The water electrolysis system according to claim 1, wherein a series number of the water electrolysis stacks in the serially connected stack group is 4 or less.

3. The water electrolysis system according to claim 1, wherein a rated current of the overcurrent interruption means is smaller than [rated current density of the water electrolysis stack] × [a parallel number of the serially connected stack group].

4. The water electrolysis system according to claim 1, wherein the rated current of the overcurrent interruption means is greater than [rated current density of the water electrolysis stack] × (1 + 1/([a parallel number of the serially connected stack group] - 1)).
